Europäisches Patentamt

European Patent Office

Office européen des brevets

(11) Publication number: **0 443 229 A1**

# EUROPEAN PATENT APPLICATION

(21) Application number: 90301780.4

(22) Date of filing: 20.02.90

(51) Int. Cl.5: **H01B 1/20**, C09D 5/24, C23F 13/02

(43) Date of publication of application:
28.08.91 Bulletin 91/35

(84) Designated Contracting States:
AT BE CH DE DK ES FR GB GR IT LI LU NL SE

(71) Applicant: EBONEX TECHNOLOGIES, INC.
5915 Hollis Street
Emeryville, Cal. 94608(US)

(72) Inventor: Moreland, Peter J.
22 Springbourne
Frodsham, Cheshire WA6 6QD(GB)

(74) Representative: Valentine, Francis Anthony
Brinsley et al
REDDIE & GROSE 16 Theobalds Road
London WC1X 8PL(GB)

(54) Electrically conductive composition and use thereof.

(57) A shaped electrically conductive article which comprises an organic polymeric material and a particulate electrically conducting titanium sub-oxide. The article may be in the shape of film (2,3) suitable for use as an anode in a cathodic protection system for the protection of steel rebars (4,5) embedded in concrete (1).

FIGURE 1

The present invention relates to a shaped article which is electrically conducting and which comprises an organic polymeric material and a particulate electrically conducting titanium sub-oxide, to a composition from which such a shaped article may be produced, and to uses of such an electrically conducting shaped article.

Although the electrically conducting shaped article of the invention has a variety of different uses it will generally be used as an electrode, and it will find its greatest application as an electrode in cathodic protection, particularly when it is in the form of a film. The electrically conducting shaped article, particularly when in the form of a film, is especially suitable for use in the cathodic protection of steel reinforcing bars or wires in concrete, hereinafter generally referred to as rebars, although it is to be understood that use of the shaped article is not limited to use in cathodic protection of rebars, nor to use in the cathodic protection in general.

Under normal environmental conditions steel rebars embedded in concrete, such as in Portland cement concrete which is strongly alkaline, form a passivating oxide film on the surfaces of the rebars which inhibits further corrosion of the rebars. However, corrosion of the rebars is caused where chloride anions penetrate into the concrete structure and cause the rebars to lose their protective passive oxide film. Such chloride anions can be introduced into a concrete structure as a result of the use of deicing salts on the concrete structure, particularly on reinforced concrete bridge decks, but also on other reinforced concrete structures e.g. parking garages, by the use of chloride-contaminated aggregate in the production of the concrete, or by the use of chloride-containing accelerators e.g. calcium chloride, in the production of the concrete. Corrosion of the steel rebars may also be caused by reduction in the concrete alkalinity which results from carbonation of the concrete brought about by carbon dioxide in the atmosphere.

The corrosion of rebars is a very serious problem which is very widespread and which is recognised to be a growing problem in a vast number of reinforced concrete structures.

The corrosion of rebars results, at the very least, in unsightly discolouration of the external surfaces of the reinforced concrete structure. However, corrosion of the rebars can result in the production of voluminous corrosion products which cause spalling or cracking of the concrete or even cause pieces of concrete to fall from the structure. In an extreme case corrosion may become so advanced as to result in failure of the steel rebars and collapse of the reinforced concrete structure.

Corrosion of rebars may be inhibited or prevented by causing the rebars to become cathodic, that is corrosion may be inhibited or prevented by application of so-called cathodic protection to the rebars. There are basically two forms of cathodic protection. In one form a sacrificial anode is associated with the reinforced concrete structure such that the rebars become cathodic. The sacrificial anode is gradually consumed during use and the anode necessarily needs to be replaced periodically. In another form a "permanent" anode is associated with the reinforced concrete structure and a direct electrical current is passed between the anode and the rebars which function as a cathode. This latter form is the so-called impressed current form of cathodic protection. In this form of cathodic protection the anode is much longer lasting than is a sacrificial anode and it is in this sense that the anode is referred to as being "permanent".

Many cathodic protection systems have been proposed for use in the cathodic protection of rebars in concrete, which systems differ mainly in respect of the nature of the anode.

A cathodic protection system which comprises a sacrificial anode is described in paper No. 41 of Corrosion 81, the International Corrosion Forum sponsored by the National Association of Corrosion Engineers, April 6-10, 1981, Toronto, Ontario, Canada, pages 41/1 to 41/11. The system comprises a sacrificial zinc anode, which may be in the form of a ribbon or a sheet, the zinc anode being covered by an overlay of asphaltic concrete. A zinc anode, which may be sprayed onto the concrete surface, may also be used in an impressed current cathodic protection system.

A cathodic protection system which comprises a permanent anode and which is operated with an impressed current is described in US patent 4255241. The system comprises flexible platinum wire anodes which are installed in slots in the reinforced concrete, the slots being filled with carbonaceous or other conductive backfill. The system comprises a series of spaced apart wire anodes.

Another cathodic protection system which comprises a permanent anode is described in European Patent Application 0 186 334A. In this published patent application there is described a system for the cathodic protection of rebars in concrete in which a source of direct electrical current is connected to the rebars, which function as cathodes, and to an anode which is a hydraulically porous material which is permeable to water in the liquid state and which is bonded to the concrete. The hydraulically porous material may be a porous ceramic material, which may be in the form of a series of plates which are spaced apart from each other and which are electrically connected to each other, and the porous material may be an electrically conducting titanium sub-oxide of formula $TiO_x$, where x is in the the range 1.67 to 1.95. The anodes, which are permeable to water in the liquid state, allow irrigation of the anode to take place such that acid which is formed at the anode, and thus at the interface between the anode and the concrete, is removed from the concrete structure. If the acid was not removed it could cause adverse chemical attack on the concrete.

In yet another type of cathodic protection system which comprises a permanent anode and which is suitable for cathodic protection of rebars in concrete the anode comprises an open mesh of a film-forming metal, e.g. titanium, coated with an electrocatalytically active material. The mesh is laid over a reinforced concrete structure, the anode subsequently being covered by a cementitious layer. Such a system is described in published GB patent Application No 2175609A.

The aforementioned cathodic protection systems which comprise a permanent anode are especially suitable for use on relatively flat structures, for example on the surfaces of steel reinforced concrete bridge decks. However, certain of the systems are less suitable for use with more irregularly shaped steel reinforced structures, such as on the undersurfaces of reinforced bridge decks, on supporting beams of such bridge decks, and on the pillars supporting reinforced concrete structures. Furthermore, installation of the cathodic protection systems may not be as convenient as may be desired, for example, because of the need to cut slots into the surface of the concrete structure in the case where flexible wire anodes are to be used, or because of the need to remove the surface of the concrete in the case where a prefabricated anode mesh is to be applied to an existing structure. Thus, although such systems may be installed reasonable easily during construction of a reinforced concrete structure they are not as readily applied to such a structure after construction and when the need for cathodic protection may have become apparent. Those cathodic protection systems which comprise spaced apart anodes, e.g. wires, also suffer from the disadvantage that because the throwing power of the anodes may not be very great the cathodic protection system may have to be operated at a relatively high anode current density in order to provide the required cathodic protection of the rebars with the result that acid may be produced at the anodes at a relatively high concentration with a resultant adverse effect on the concrete of the structure.

GB Patent Application 2 140 456A describes a cathodic protection system which does not comprise spaced apart anodes, and which is said to be suitable for use with an irregularly shaped reinforced concrete structure, which is readily installed after construction, and which does not require the provision of slots or the like in the concrete structure. In this published patent application there is described a cathodic protection system which comprises an electrically conductive film applied to the surface of the concrete structure and which serves as the anode of the system. The film may be applied from a paint composition and thus it may readily be applied to irregularly shaped surfaces. The paint composition comprises a liquid component, a binder such as an epoxy resin, and an electrically conductive filler. The electrically conductive fillers which are described are carbonaceous, namely, graphite, carbon or coke breeze. Such an anode can be expected to have good throwing power such that the cathodic protection system may be operated at current densities which are lower than the current densities which are required in the operation of systems which comprise spaced apart anodes. The anode is also light in weight and, as the anode is applied from a paint composition, it is relatively easily applied and maintained.

The use of carbonaceous fillers, particularly carbon itself, in paint compositions for cathodic protection does however suffer from certain disadvantages. For example, the carbon filler in the applied film may be oxidised under the acidic conditions which prevail adjacent to the film when the film functions as an anode, and also by the oxygen and chlorine which are produced in use. Furthermore, there may be carcinogenic problems associated with the production and use of the carbon.

The present invention relates to an electrically conducting shaped article, particularly a film, which is suitable for use in a cathodic protection system, and to a composition from which such a shaped article may be produced, which comprises a filler which is non-carbonaceous and which is chemically more stable than is carbon under the conditions which prevail when the shaped article is used as an anode, particularly as an anode in a cathodic protection system.

The present invention provides an electrically conducting shaped article which comprises an organic polymeric material having a particulate filler embedded therein, in which the filler comprises an electrically conducting particulate titanium sub-oxide and in which the filler is present in a proportion such that the shaped article has an electrical conductivity of at least 0.01 ohm$^{-1}$ cm$^{-1}$.

The invention also provides a composition suitable for use in the production of a shaped article as described, which comprises a homogenous mixture of an organic polymeric material or a precursor therefor and a particulate filler, which filler comprises an electrically conducting particulate titanium sub-oxide.

In the composition the mixture of organic polymeric material or precursor therefor and filler is homogenous, that is the filler is evenly distributed throughout the composition, and the proportion of titanium sub-oxide to organic polymeric material in the composition is such that the electrical conductivity of the shaped article produced from the composition is at least 0.01 ohm$^{-1}$ cm$^{-1}$.

The shaped article may be used in a variety of applications but it will generally be used as an electrode. When the shaped article is used as an electrode it may be used in applications other than as an anode in a cathodic protection system. However, a preferred form of shaped article is a film, especially where the shaped article is to be used as an anode in a cathodic protection system, and in a preferred embodiment of the composition of the invention, which is particularly suitable for use in the production of such a film, the composition is a fluid composition, particularly a fluid composition having a consistency suitable for application as a paint, which comprises a liquid component, an organic polymeric material or a precursor therefor dissolved or dispersed therein, and a particulate filler dispersed therein which comprises an electrically conducting titanium sub-oxide.

Further embodiments or the invention include use of a shaped article as described, particularly when in the form of a film, as an anode in a cathodic protection system, and a cathodic protection system which comprises a concrete structure having steel reinforcing bars or wires embedded therein, and a shaped article as described, particularly a film, in electrical contact with the structure.

We are aware of published Japanese Patent Application No 61-106414 in which there is described conductive fine powders of titanium oxides, for example sub-oxides of formula TiOx in which x is in the range 1.5 to 1.9, and use of the fine powders as conductivity imparting agents for supports such as electrophotographs or static recorders, as antistatic agents for films, fibres and magnetic tapes, or as black pigments for plastics, paints, inks and cosmetics. There is no disclosure in this published application of a shaped article such as a film having an electrical conductivity as high as 0.01 ohm$^{-1}$ cm$^{-1}$, which is the minimum electrical conductivity of the shaped article of the present invention, nor is there any disclosure of a composition from which such a shaped article could be produced, nor is there any disclosure in this published application of use of the titanium sub-oxide as or as part of an anode, e.g. as an anode in a cathodic protection system. We are also aware of European Patent Application 0047595-A in which there is described the use of an electrically conducting titanium sub-oxide TiOx, in which x is 1.55 to 1.9, as a ground bed anode in a cathodic protection system, as a ground bed electrode in the protection of oil well structures, and, when in the form of powdered TiOx, as a conducting backfill for ground bed electrodes. There is no disclosure in this application of a shaped article of an organic polymeric material, particularly a film, containing a titanium sub-oxide, nor is there any suggestion of the use of such a shaped article as an anode, e.g. as an anode in cathodic protection.

The organic polymeric material in the shaped article and in the composition of the invention may be, for example, a polyolefin, e.g. polyethylene or polypropylene, or polystyrene, or a halogen-containing organic polymeric material, e.g. polyvinyl chloride or a chlorinated olefin polymer, e.g. a chlorinated rubber. The organic polymeric material in the composition may be in the form of a precursor therefor, that is in the form of a polymerisable material, for example a thermosetting material, e.g. a polyester resin or an epoxy resin. However, the nature of the organic polymeric material will depend to some extent on the intended use of the shaped article. Where, for example, the shaped article is to be used as an anode in cathodic protection, particularly of rebars in concrete, it is desirable that the organic polymeric material is resistant to attack by the chemicals produced at the anode during operation of the cathodic protection system, e.g. acid, chlorine and oxygen. For this reason preferred organic polymeric materials are epoxy and polyester resins, and halogen-containing organic polymeric materials, particularly fluorine-containing organic polymeric materials. As in use the shaped article may be exposed to atmospheric conditions, e.g. when used as an anode in a cathodic protection system, it is desirable that the organic polymeric material is resistant to such conditions, in particular it is desirable that the organic polymeric material is stable in prolonged sunlight.

The shaped article and the composition of the invention contain an electrically conducting particulate titanium sub-oxide, that is a particulate titanium sub-oxide of formula TiOx in which x is less than 2. Any value of x may be chosen provided that the titanium sub-oxide is electrically conducting, and provided that in the shaped article it is possible to achieve the desired electrical conductivity. A mixture of titanium sub-oxides having differing values of x may be used. Specifically, x in the formula TiOx may be in the range 1.5 to 1.9, although x may be outside this range, particularly less than 1.5. A preferred value of x is in the range 1.67 to 1.9 on account of the good electrical conductivity of the titanium sub-oxide and the resistance of the titanium sub-oxide to attack by corrosive chemicals, e.g. acids. The titanium sub-oxide may be predominantly Ti$_4$O$_7$ and/or Ti$_5$O$_9$.

The particle size of the titanium sub-oxide may vary over a wide range but in general the particles will have a size of less than 100 microns, particularly less than 50 microns. A preferred particle size is less than 10 microns or even less than 1 micron. The particle size may be of the order of 0.1 micron or even less, e.g. as low as 0.01 micron. The titanium sub-oxide may comprise a mixtue of particles of differing sizes.

The electrically conducting particles of titanium sub-oxide may have a varying composition, that is the value of x in the formula $TiOx$ may vary within a given particle and between different particles. Indeed it is not necessary that the whole of a particle comprises electrically conducting titanium sub-oxide. All that is required is that the particles have at least a surface of electrically conducting titanium sub-oxide; the interiors of the particles may comprise electrically non-conducting titanium dioxide. However, it is most convenient, for the particles to comprise electrically conducting titanium sub-oxide throughout the particles.

The proportion of titanium sub-oxide to organic polymeric material in the shaped article, and in the composition, should be such that the shaped article has an electrical conductivity of at least 0.01 $ohm^{-1}cm^{-1}$. It is generally preferred that the shaped article has a high electrical conductivity, for example, in order that a shaped article in the form of a thin film may be particularly suitable for use as an anode in a cathodic protection application, and for this reason it is preferred that the shaped article has an electrical conductivity of at least 1 $ohm^{-1}$ $cm^{-1}$, more preferably at least 10 $ohm^{-1}$ $cm^{-1}$. The proportion of titanium sub-oxide which is required in order to produce the desired electrical conductivity in the shaped article will depend on the particle size of the titanium sub-oxide, on the shape of the particles, and on the electrical conductivity of the particles. However, in general, the proportion of titanium sub-oxide will be at least 10% of titanium sub-oxide by volume of organic polymeric material plus titanium sub-oxide, preferably at least 20% by volume. The shaped article, and the composition, may contain as much as 80% of titanium sub-oxide by volume of organic polymeric material plus titanium sub-oxide.

In order to produce a shaped article of given electrical conductivity the proportion of titanium sub-oxide which is required will be smaller where the particles are needle-like or plate-like in shape than where the particles are of a more spherical shape. Thus, in a shaped article containing a given proportion of titanium sub-oxide the electrical conductivity will be greater where the particles are needle-like or plate-like as the area of contact between adjacent particles will be greater than is the case where the particles are more spherical in shape.

The shaped article and the composition may contain particulate fillers in addition to titanium sub-oxide. These additional fillers may be selected in order to impart specific properties to the shaped article, for example, colour or reinforcement. The additional fillers should be resistant to the conditions encountered during use of the shaped article.

The electrically conducting titanium sub-oxide may be made, for example, by reduction of particulate titanium dioxide. For example, particulate titanium dioxide may be reduced by heating at elevated temperature in the presence of a reducing gas, e.g. hydrogen or carbon monoxide. Alternatively, or in addition, titanium dioxide may be admixed with a solid reducing agent, e.g. titanium, or carbon, and heated at elevated temperature. The reduction should be effected until the desired value of x in the formula $TiOx$ has been achieved. An elevated temperature of the order of $1000°C$ may be required in the reduction process during which some sintering of the particles may take place. If such sintering does take place the reduced material may subsequently be ground in order to produce the desired particle size of titanium sub-oxide. The production of electrically conducting titanium sub-oxides is described, for example, in the aforementioned published European Patent Application No. 0047595 and published Japanese Patent Application No. 61-106414. After production of the particulate titanium sub-oxide it may be useful to clean the particle surfaces to remove impurities therefrom.

The composition of the invention which comprises a homogenous mixture of an organic polymeric material or precursor therefor and a particulate electrically conducting titanium sub-oxide, optionally a liquid component, and optionally an additional particulate filler, may be produced by any convenient mixing process, although the process to be used will depend at least to some extent on the nature of the components of the composition and particularly on the presence or absence of a liquid component. The mixing process which is used should result in production of a homogenous composition. Where the composition does not contain a liquid component the composition may be mixed by processes which are conventional in the plastics and rubber processing art, for example, by use of a bladed mixer, especially such a mixer which imparts high shear to the composition, by use of a twin-roll mill, or by use-of a screw extruder. Shaping processes which may be used to produce the shaped article of the invention include calendering, as on a twin roll mill, compression moulding in a mould, injection moulding and extrusion. Where the composition of the invention contains a liquid component the mixing process chosen will depend to some extent on the proportion of solid components in the composition, that is on the proportion of organic polymeric material, titanium sub-oxide, and optional additional filler. However suitable mixing processes will generally be ball-milling and mixing in a bladed mixer. Shaping of the composition may be by casting into a mould, or by application of the composition to the surface of a substrate by a painting technique, for example, by applying the composition by brush, roller, or spray, followed by removal of the liquid components e.g. by causing or allowing the applied coating to dry. A film of increased thickness may be built up by application of multiple coatings of the composition to the surface of a substrate. Where the composition of the invention comprises a liquid component the organic polymeric material or precursor therefor should be dissolved in or dispersed in the liquid component of the composition, and the particulate titanium sub-oxide, and optional additional particulate filler, should also be dispersed in the liquid component. Dispersion may be assisted by use of suitable dispersing agents.

Where the composition of the invention comprises a liquid component the proportion of solid components in the composition will depend to some extent at least on the desired method of shaping of the composition which is to be used in order to produce the shaped article. Thus, where it is desired to produce a film by a painting technique the composition is suitably relatively fluid and in this case the composition may, for example, contain no more than 50% by volume of solid components, although it is desirable that it does contain at least 10% by volume of solid components. On the other hand where the composition is to be shaped by compressing the composition into a mould the composition may contain more than 50% by volume of solid components. The aforementioned proportions are given by way of example only and are not intended to be limiting.

Where the composition contains a precursor for the organic polymeric material the precursor may be converted to the polymeric material after production of the shaped article. For example, where the precursor is in the form of a polyester resin or an epoxy resin the precursor in the shaped article may be cured, for example by heating in the presence of a suitable cross-linking agent, or hardener, respectively, which may be present in the composition from which the shaped article has been produced.

A further embodiment of the invention is the use of a shaped article as described as an anode in a cathodic protection system. The cathodic protection system comprises a concrete structure having steel reinforcing bars or wires embedded therein and which are to be protected, and the shaped article as described in electrical contact with the structure, and a source of direct electrical current connected to the shaped article and to the reinforcing bars or wires, in operation the bars or wires which are to be protected being cathodic and the shaped article being anodic. In a particular form of this embodiment of the invention the cathodic protection system comprises steel reinforcing bars or wires embedded in a concrete structure, a shaped article in the form of a film as herein described on the surface of the concrete structure, and a source of direct electrical current connected to the reinforcing bars or wires and to the film, in operation the bars or wires being cathodic and the film anodic. The film is not in direct contact with the bars or wires otherwise an electrical short circuit will occur.

In order to provide protection to substantially the whole of the rebars in the concrete structure the film should be applied to those parts of the structure adjacent to the rebars so that there is only a short path for the electrical current to travel between the film and the rebar.

In order to provide good distribution of electrical current to the film anode in the cathodic protection system the film may be in electrical contact with a current distributing wire, or a plurality of such wires. The wire or wires may be embedded in the film and in operation they will be connected to a source of direct electrical current. The wire or wires may be made of platinum or other suitable chemically inert electrical conductor.

A suitable thickness of the film which functions as an anode in the cathodic protection system is 50 microns to 1000 microns although the film may have a thickness outside this range. A preferred film thickness is in the range 150 to 500 microns.

The film is preferably porous so that products which are produced in operation of the cathodic protection system, and particularly gaseous oxygen and chlorine produced by electrolysis of water and sodium chloride respectively, may escape from the concrete structure. The film is thus preferably not so thick as to be impervious to such gaseous products, and it is preferably also permeable to water vapour in order that a build-up of water at the concrete film interface may be prevented.

The composition of the invention, may comprise other components, e.g. colouring matter, in order that the film produced therefrom may have a desirable appearance. Alternatively, or in addition, the film may be given a suitable top coat.

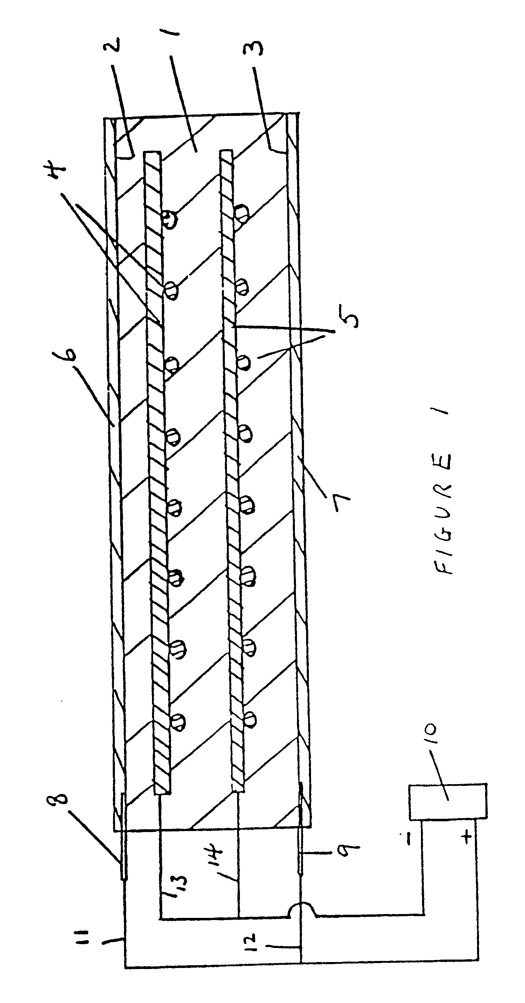

An embodiment of the cathodic protection system of the invention will be described with reference to the accompanying figure which shows in cross-section a concrete beam 1 having an upper surface 2 and a lower surface 3, and containing steel reinforcing bars 4,5. The upper surface 2 and the lower surface 3 of the beam 1 are covered by coatings in the form of films 6,7 respectively which comprise particulate titanium sub-oxide in an organic polymeric material. The films are electrically conducting and have embedded therein platinum wires 8,9. The wires 8,9 are connected to the positive terminal of a rectifier 10 via leads 11, 12, the steel reinforcing bars 4, 5 are connected via leads 13, 14 to the negative terminal of rectifier 10.

In operation a small direct electrical current is passed between the films 6, 7 and the reinforcing bars 4, 5 so that the films 6, 7 are anodic and the reinforcing bars 4, 5 are cathodic in order to prevent corrosion of the reinforcing bars 4, 5.

## Claims

1. A fluid composition suitable for use in the production of a film, (2,3) and having a consistency suitable for application as a paint, comprising a liquid component, an organic polymeric material or a precursor therefor dissolved or dispersed therein, and a particulate filler dispersed therein, wherein the particulate filler comprises an electrically conducting titanium sub-oxide of formula $TiO_x$ where x is less than 2, and wherein the titanium sub-oxide is present in a quantity such that the film will have an electrical conductivity of at least 0.01 $ohm^{-1}$ $cm^{-1}$.

2. A fluid composition according to claim 1, wherein the film (2,3) will have an electrical conductivity of at least 10 $ohm^{-1}$ $cm^{-1}$.

3. A fluid composition according to claim 1 or 2, wherein the proportion of titanium sub-oxide is at least 10% of titanium sub-oxide by volume of the organic polymeric material plus the titanium sub-oxide.

4. A fluid composition according to claim 1 or 2, wherein the proportion of titanium sub-oxide is at least 20% of titanium sub-oxide by volume of the organic polymeric material plus the titanium sub-oxide.

5. A fluid composition according to any preceding claim, wherein the titanium sub-oxide is of the formula $TiO_x$ where x is in the range 1.67 to 1.9.

6. A fluid composition according to any preceding claim, wherein the titanium sub-oxide is predominantly $Ti_4O_7$ and/or $Ti_5O_9$.

7. An electrically conducting shaped article comprising an organic polymeric material having a particulate filler embedded therein, wherein the filler comprises an electrically conducting particulate titanium sub-oxide of the formula $TiO_x$, where x is less than 2 and wherein the filler is present in a proportion such that the shaped article has an electrical conductivity of at least 0.01 $ohm^{-1}$ $cm^{-1}$.

8. An electrically conducting shaped article according to claim 7 wherein the shaped article is a conductive film (2,3).

9. An electrically conducting shaped article according to claim 7 or 8 wherein said organic polymeric material is selected from the group consisting of epoxy resins, polyester resins and halogen containing organic polymeric materials.

10. An electrically conducting shaped article according to claim 7, 8 or 9 wherein said titanium sub-oxide is of the formula $TiO_x$, where x is in the range 1.67 to 1.9.

11. An electrically conducting shaped article according to any of claims 7 to 10 wherein said titanium sub-oxide is predominantly $Ti_4O_7$ and/or $Ti_5O_9$.

12. A cathode protection system for rebars (4,5) comprising a concrete structure having steel reinforcing bars or wires (4,5) embedded therein, an electrically conductive film (2,3) on the surface of the concrete structure (1) and a source (10) of direct electrical current connected to the reinforcing bars or wires (4,5) in a manner such that, in operation, the film (2,3) is anodic and the bars or wires (4,5) are cathodic, wherein the conductive film (2,3) comprises an organic polymeric material having distributed therein a titanium sub-oxide particulate having the formula $TiO_x$, where x is less than 2, the sub-oxide being present in a proportion such that the electrical conductivity of the film is at least 0.01 $ohm^{-1}$ $cm^{-1}$.

FIGURE 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 5) |
|---|---|---|---|
| A | DATABASE DERWENT WORLD PATENT INDEX, AN=86-045696, Derwent Publications Ltd, London, GB; & JP-A-60 264 313 (TEIKOKU KAKO) * Abstract * | 1,5 | H 01 B  1/20<br>C 09 D  5/24<br>C 23 F  13/02 |
| A | GB-A-2 170 512  (TAYLOR WOODROW) * Claims 1-12 * | 12 | |
| A | EP-A-0 210 058  (ACHESON) * Claims 1-20 * | 12 | |

TECHNICAL FIELDS SEARCHED (Int. Cl.5)

H 01 B   1
C 09 D   5
C 23 F   13

The present search report has been drawn up for all claims

| Place of search | Date of completion of the search | Examiner |
|---|---|---|
| THE HAGUE | 03-10-1990 | DROUOT M.C. |